# EUROPEAN PATENT APPLICATION

(11) **EP 1 518 831 A1**
(43) Date of publication of application: **30.03.2005**
(21) Application number: 03077982.1
(22) Date of filing: 24.09.2003
(51) Int. Cl.: C02F 3/12

(54) **Aerobic wastewater treatment**

(71) Applicant: Nederlandse Organisatie voor toegepast-natuurwetenschappelijk Onderzoek TNO, 2628 VK Delft (NL)
(72) Inventor: van Houten, Renze Tjeert, 6708 KR Wageningen (NL)
(74) Representative: Prins, Adrianus Willem, Mr. Ir.

(57) **Abstract**

The invention is directed to a wastewater process, in particular an aerobic wastewater process, as well as to a reactor for carrying out wastewater processes.

The process and apparatus according to the present invention uses a perforated module, which retains sludge particles in the aerobic reactor. Thus a purified effluent may be obtained in high flowrates.

## Description

The invention is directed to a wastewater process, in particular an aerobic wastewater process, as well as to a reactor for carrying out wastewater treatment processes.

Biological wastewater purification processes are commonly employed for treatment of wastewater, *e.g.* from industrial or domestic origin. In this way an effluent may be obtained that is sufficiently clean to be discharged in the environment, *e*.*g*. in canals, the sea, *etc.*

The effluent is considered sufficiently clean if the oxygen demand (*e.g.* expressed as the chemical oxygen demand, COD; or the biological oxygen demand, BOD) is below a certain limit, which limit is commonly dictated by local legislature.

Although anaerobic wastewater treatment processes have been employed with some success, the COD of the effluent of such process is generally too high to allow for discharge in the environment. For this reason anaerobic treatment processes are usually followed by an aerobic treatment step to obtain an effluent of acceptable quality.

One of the problems that frequently occurs with aerobic wastewater treatment processes, is that sludge, which necessarily is present in the reactor in which the process is carried out, is entrained in the effluent. This problem is in particular acute in processes which use a settling tank for separating sludge from the effluent. Since the majority of sludge consists of microorganisms, this results in an effluent that contains considerable amounts of organic matter, which amounts are often too high to meet the requirements with respect to COD.

In order to improve the separation of sludge from the liquids in the reactor so as to obtain a cleaner effluent, it has been proposed to use sand bed filters and membrane filters.

Although sand bed filters can be used with certain success to prevent larger sludge particles from being entrained and thereby discharged, these type of filters are usually limited in the incoming suspended solids concentration (which generally must be below 0,5 g/L). Also the flux through sand beds is very limited by the required contact time of typically 10 - 20 minutes, and the beds are characterized by considerable pressure drops. In practice this means that sand beds require a considerable amount of space and significant pump energy.

Membrane filters are nowadays commonly applied in aerobic bioreactors for separating sludge from the liquid reactor contents. Usually membrane filters are made of polymeric material and may be prepared using various techniques, so as to obtain a plate or tubular type of structures having the desired average pore diameter. A mounted set of plates or tubes forms a membrane module, which can be installed in said wastewater treatment processes. Known membranes used in aerobic wastewater treatment plants, have an average pore diameter of from 0.01 to 1 µm. Although membrane modules are very efficient in separating sludge from liquid and thus retaining sludge in the reactor, these known membrane modules suffer from a number of drawbacks. One of these drawbacks is that the membranes easily get plugged, by which frequent cleaning of the membranes is required, which results in down time of the wastewater treatment plant. Furthermore, when cleaning the membranes, only moderate conditions can be applied, in particular with regards to pH and temperature of the cleaning liquids, in order to prevent damage to the membrane module. Another important drawback of current membranes is the limited flux of liquids that can be obtained for a given pressure drop.

It is an object of the present invention to provide an aerobic wastewater process and a reactor for carrying out wastewater processes which do not suffer from the above-mentioned disadvantages.

It was found that this object is met by using a perforated separator, such as a perforated plate or tube, wherein the perforations are considerably larger than those of the prior art membranes used for the same purpose.

Therefore, in a first aspect the present invention is directed to a process for wastewater treatment, comprising the steps of feeding a wastewater stream to a reactor, in which step said wastewater is contacted with sludge under aerobic conditions; and passing at least part of the liquid contents of said reactor over a perforated separator, whereby a purified effluent is obtained.

In a further aspect the present invention is directed to a reactor for wastewater treatment, comprising means for feeding a wastewater stream to said reactor, means for contacting said wastewater with sludge under aerobic conditions, a perforated separator having perforations with a mean diameter of 5 to 150 µm and means for removing an effluent from said reactor. Such a reactor is very suitable for carrying out the process of the present invention.

The perforated separator can have various forms. It may for example be in the form of a perforated plate. It may also be in the form of a tube, the walls of which are perforated.

Surprisingly, it was found that by using a perforated separator, such as a perforated plate or tube, is it possible to retain the sludge in the aerobic reactor in a very effective way, despite the fact that the perforations in the separator may be relatively large (*e.g.* larger than at least part of the sludge particles). The diameter of the sludge particles may vary widely *e.g.* from 10 to 3000 µm. Nevertheless, the perforations are able to retain substantially all of these particles. Without wishing to be bound by theory, it is assumed that during operation a so-called dynamic membrane is formed on the perforated module. This dynamic membrane is formed from biomass and prevents particles, in particular sludge particles, having a diameter which may be considerably lower than the diameter of the perforations from slipping through. Thus the filter efficiency of the perforated module is improved considerably.

By using a perforated separator, a number of advantages are obtained compared with prior art methods and apparatuses for retaining sludge in the reactor.

In the first place the flux of liquid that is extracted from the reactor (the effluent that is to be discharged) may be considerably larger. Moreover, the flux is very constant in time and consequently, the down time for cleaning may be reduced considerably when compared to membrane module based aerobic wastewater treatment facilities. Also the modules may be replaced and/or cleaned relatively easily (when compared with sand bed filters and common membrane modules). It has been found that good results are obtained by employing perforations (typically having a circular shape) having an average diameter of less than 1 mm, preferably from 5 to 150 µm, more preferably from 10 to 100 µm, for instance 50 - 60 µm. The mutual distance of the perforations may be chosen such as to accommodate the desired total flux. Typical distances between the perforations are in the order of the size of the perforations, *e.g.* one or two times up to ten times the size of a perforation.

Furthermore, the perforated separators can be made of materials that may withstand much more severe conditions than the polymeric based materials. This not only improves the lifetime of the separators but it also facilitates the cleaning of the separator module under much more severe conditions and thus provides for shorter cleaning times. Preferably the separator modules are made of metal, preferably stainless steel, such as AISI 316 L.

Another advantage of using perforated plates rather than prior art sludge separation techniques is that the perforations can be made with a very high accuracy, both with respect to the dimensions of each perforations as with respect to their mutual distribution. For instance, it is possible to make well-defined perforations using *e*.*g*. lithographic techniques or by laser techniques known per se. In this way holes of a certain diameter may be provided with a tolerance of less then 0,1 µm. The modules may be provided in the form of plates, which are mounted parallel in a frame, forming a perforator module. The module is preferably installed vertically in the bioreactor or in a separate compartment connected to the bioreactor. The thickness of the plates is chosen such that sufficient mechanical strength is obtained. Typically the plates have a thickness of 0,05 to 1 mm. Alternatively, or in addition to perforated plates, the modules may comprise tubes having perforations in the wall. Tubes may be either capillary (typical diameter 1 - 5 mm) or tubular (typical diameter between 5 and 50 mm.

By choosing operating conditions, the diameter of the sludge particles is preferably kept above 1 mm. These operating conditions include the temperature, which is preferably more than 10°C, more preferably more than 25 °C. Because the perforated separator modules can be constructed from materials that can withstand extreme conditions, the process and the apparatus of the present invention is very suitable for treatment of wastewater streams of high temperature, such as streams having a temperature of more than 45 °C, for instance of from 50 to 60 °C or even more. The pH of the reactor contents is preferably kept at 6 - 8. The dimensions of the sludge particles may also be controlled by varying the nutrient/sludge ratio. It is also possible to employ turbulence of some sort, *e.g.* by means of jets and/or coarse bubble aeration.

Another wastewater stream that can be treated according to the present invention more successfully than according to prior art techniques are wastewater streams having a high salt content, in particular a high content of scale-forming salts such as CaCO₃ and MgCO₃. For instance, wastewater streams having these salt contents in concentrations above their saturation point may be treated according to the present invention.

Yet another a wastewater stream that can be treated successfully according to the present invention and which often poses difficulties in prior art techniques are streams comprising oily and/or fatty substances, for instance certain wastewater stream from food and fish industries and metal cutting fluids.

According to the present invention a very robust and versatile reactor may be provided. Such a reactor comprises means for feeding a wastewater stream to said reactor, means for contacting said wastewater with sludge under aerobic conditions, a perforated separator module having perforations with a mean diameter of 5 to 150 µm and means for removing an effluent from said reactor. Optimum operation conditions may change depending on the given factors, including type and flow rate of wastewater to be treated, but the skilled person will for each situation be able to find these optima, in particular when the above-mentioned remarks relating to operating conditions are taken into account.

By using a perforated plate or tube, having the relatively large perforations as indicated, in an aerobic wastewater treatment process, a purified effluent may be obtained that is sufficiently low in COD (or BOD) to be discharged in the environment without any problems.

## Claims

1. Process for wastewater treatment, comprising the steps of
- feeding a wastewater stream to a reactor, in which step said wastewater is contacted with sludge under aerobic conditions; and
- passing at least part of the liquid contents of said reactor over a perforated separator, whereby a purified effluent is obtained.

2. Process according to claim 1, wherein said perforated separator is provided with perforations having a mean diameter of 5 to 150 µm.

3. Process according to any of the previous claims, wherein said perforated separator ne is in the form of a perforated plate.

4. Process according to any of the previous claims, wherein said perforated plate is made of metal, preferably stainless steel.

5. Process according to any of the previous claims, wherein said wastewater stream is selected from a stream having a salt concentration above its saturation point, a stream having a temperature of above 35 °C, a stream comprising oily and/or fatty substances, and combinations thereof.

6. Process according to any of the previous claims, wherein said sludge is in the form of particles having a mean diameter of at least 1 mm.

7. Process according to any of the previous claims, which is carried out at a temperature of more than 10 °C.

8. Process according to claim 7, wherein the temperature is from 50 to 70 °C.

9. Reactor for wastewater treatment, comprising means for feeding a wastewater stream to said reactor, means for contacting said wastewater with sludge under aerobic conditions, a module of perforated separators having perforations with a mean diameter of 5 to 150 µm and means for removing an effluent from said reactor.

10. Use of a perforated plate or tube, having perforations with a mean diameter of 5 to 150 µm in an aerobic wastewater treatment process.
